# EUROPEAN PATENT SPECIFICATION

(11) **EP 3 885 115 B1**
(45) Date of publication and mention of the grant of the patent: **10.01.2024**
(21) Application number: 21162008.3
(22) Date of filing: 11.03.2021
(51) Int. Cl.: B29D 30/68, B23K 26/035, B23K 26/352

(54) **LASER ASSEMBLY FOR OBTAINING A TREAD HAVING INCREASED DRAINAGE**
LASERANORDNUNG ZUR HERSTELLUNG EINER LAUFFLÄCHE MIT ERHÖHTER ABLEITUNG
ENSEMBLE LASER POUR OBTENTIR UNE BANDE DE ROULEMENT PRÉSENTANT UN DRAINAGE ACCRU

(30) Priority: 23.03.2020 IT 202000006097
(43) Date of publication of application: 29.09.2021
(73) Proprietor: Bridgestone Europe NV/SA, 1930 Zaventem (BE)
(72) Inventor: AGORETTI, Pasquale, 00128 Roma (IT); RUGGIERO, Davy, 00128 Roma (IT)
(74) Representative: Marchetti, Alessio

(56) References cited:
- WO-A1-96/40467
- WO-A1-2007/106961
- WO-A1-2019/206546
- DE-A1-102008 041 774
- DE-A1-102016 220 186
- US-A- 3 850 222
- US-A- 4 147 196

## Description

The present invention relates to an assembly for the preparation of a tread having increased drainage capability.

Part of the research in the field of pneumatic tyres is concentrated on obtaining treads that have improved performance in terms of wet grip and, in particular, in terms of wet braking.

As is known to a person skilled in the art, the grip of the tread on the road surface under wet conditions is a function of the capability of the tread itself to remove the layer of water which forms between the road surface and the tread. This layer of water necessarily compromises the effective grip of the tread on the road surface.

To facilitate the removal of the layer of water, the treads are provided with grooves. In fact, by means of the grooves of the tread, a drainage step is implemented.

In this regard, it is important to explain that during the braking action of a pneumatic tyre under wet conditions, the shorter the duration the drainage step and the greater the amount of water removed, the more effective the braking action.

As is known, a solution for rendering the drainage step shorter and also for increasing the quantity of water that is drained, is that of increasing the volume of the grooves within the tread. This solution, whilst succeeding in rendering the drainage step shorter and more effective, nevertheless, necessarily causes the contact surface between the tread and the road surface to be reduced, to the detriment of the same braking action.

Furthermore, it is known that an increase in the volume of the grooves can negatively influence the wear resistance of the tread.

With the aim of rendering the drainage step shorter, the inventors of the present invention have created a technique for imparting a specific texture to the surface of the grooves, without thereby reducing the contact surface between the tread and the road surface. In this way, surface structures are produced that make the drainage step shorter.

As is known to a person skilled in the art, an objective parameter for measuring the affinity between water and a surface is the so-called "contact angle", i.e., the angle between the surface and the tangent to the outer surface of the drop of water: the greater the contact angle between the drop of water and the surface, the greater the tendency of the water not to wet the surface and, therefore, the more efficient the surface drainage will be.

The methods up to now that were used for implementing the surface textures of the grooves of treads have related to the use of associated molds, which during the vulcanization step are used to define the intended surface texture. Such a solution is disadvantageous in terms of productivity, insofar as there is often the requirement of having to modify the design of the grooves as a function of the type of compound with which the tread is manufactured.
US3850222 discloses a tool that makes it possible to manually cut a tread pattern in vulcanized treads of large tires, by the provision of a tool comprising a heated U-shaped blade having a shaped corresponding to the profile of the grooves to be cut.

The inventors of the present invention have created a method which, by means of the use of a laser under particular operating conditions, ensures the possibility of producing the intended surface texture of the tread grooves without thereby bringing about disadvantages in terms of productivity.

The advantage of using a laser in order to produce the surface structures lies in the speed of application thereof, for every type of tread design (arrangement and conformation of the grooves).

The use of lasers has long been known in the production of pneumatic tyres, in particular for the marking (engraving) of serial numbers, product specifications, or logos upon the sidewall of the pneumatic tyre.
DE 102016220186 discloses a method for producing recesses in a lateral surface of a profile block element of a pneumatic vehicle tyre, wherein the profile block element is arranged on a tread of the pneumatic vehicle tyre, wherein a pulsed laser is used.

The type of device used for applying a laser to pneumatic tyres, and to which the present invention refers, comprises a machining head wherein a laser beam output window is formed, and wherein the emission modes thereof have been programmed using appropriate software.

The machining head can also comprise two retractable actuating pins arranged on opposite sides in relation to the laser beam output window and having the function of actuating the emission of the laser beam itself. In other words, the device is operated only when the machining head is arranged in contact with the surface whereupon the incision is to be made, insofar as being in contact with said surface pushes the two pins into a retracted actuating position thereof. Such a solution ensures the certainty of not directing the laser beam against a surface that is different from that whereupon the incision is to be made.

Although the laser device described above finds effective application upon flat surfaces, it does however encounter notable problems when applied to uneven surfaces, such as, for example, tread grooves.

In the first place, it is not always easy to ensure the correct alignment of the laser beam output window with the tread groove; and secondly, should the head of the laser device be equipped with retractable pins, the presence of a non-planar surface would hinder the compression action of the pins in their retracted actuating position and, therefore, the consequent actuation of the laser.

The inventors of the present invention have implemented a technical solution such as to overcome, in a simple and effective manner, the problems described above.

In particular, the technical solution of the present invention involves, in the first instance, the advantage of ensuring the correct positioning of the laser beam output window upon the groove and, secondly, allowing for the use of the laser device with retractable pins upon the tread grooves.

The object of the present invention is an assembly for the creation of a tread groove surface structure, comprising a laser device comprising a machining head wherein a laser beam output window is formed, wherein the emission modes thereof have been programmed using appropriate software; said assembly being characterized in that it comprises a plurality of adapter elements wherein each thereof comprises an upper surface that is suitable for being connected to said machining head and an alignment portion defined by a rigid structure that is suitable for being inserted, without freedom of transverse movement, within a groove of a pneumatic tyre tread, and in that said machining head comprises at least one pair of retractable drive pins, arranged on opposite sides in relation to the laser beam output window, and having the function of actuating the emission of the laser itself, and by the fact that upon said upper surface of each of the adapter elements a cavity is formed that is suitable for housing with adherence a respective retractable actuating pin and wherein the height thereof is less than that of the respective retractable actuating pin in an extended position thereof.

From the above it is clear how the combined presence of the retractable pin and the cavity formed upon the upper surfaces of the adapter elements have a dual function: (i) the function of implementing the connection between the machining head and the adapter elements, thereby ensuring the correct positioning of the window with respect to the tread groove, and (ii) the actuating of the laser device only when the correct positioning is obtained. In this way, in addition to ensuring the correct machining of the surface of the tread groove, there is the certainty, for safety reasons, that the laser beam is emitted from the device only onto the surface of the groove to be machined.

Preferably, said cavity has a circular shape with a diameter d of between 5 and 20 mm and a height hi of between 1 and 20 mm. Preferably, said upper surface is set apart from said aligning portion by a distance he of between 0 and 10 mm. Preferably, each of said adapter elements has a longitudinal extension w of between 5 and 50 mm.

Preferably, said adapter elements are implemented in steel by means of a 3D printer.

An exemplary, non-limiting embodiment is given below for illustrative purposes and with the aid of the accompanying figures, wherein:
- Figure 1 is a front view of a head of a laser device of the type to which the invention relates;
- Figure 2 is a perspective view from above of a preferred embodiment of an adapter element according to the present invention;
- Figure 3 is a longitudinal section of an adapter housed within a groove.

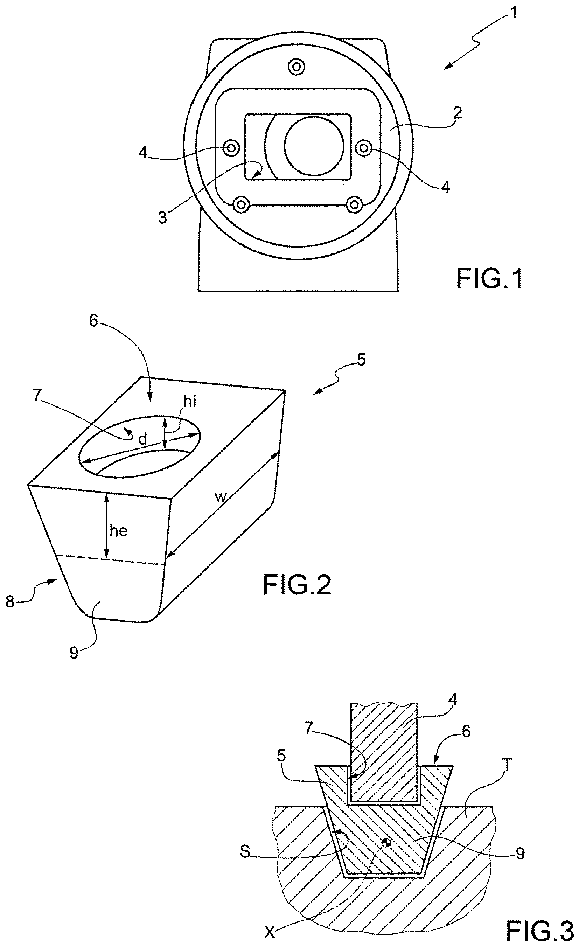

In figure 1, the laser device of the type considered in the present invention is indicated, in the entirety thereof, with 1. In particular, the illustrated device is of the type marketed under the name 4JET T-MARK COMPACT.

The device 1 comprises a head 2, which comprises a laser beam output window 3 and a pair of retractable actuating pins 4 arranged on opposite sides in relation to the window 3. The retractable actuating pins 4 have the function of actuating the emission of the laser beam once they are moved to their retracted position. Such a mechanism has a safety feature, insofar as it ensures that the laser emission is produced only against a surface that causes the retractable actuating pins 4 to move from their extended position to their retracted position.

In Figure 2, indicated in the entirety thereof with 5, is an adapter element according to the present invention.

The adapter element 5 comprises an upper surface 6 wherein a circular cavity 7 is formed, of a height hi and a diameter d.

According to the present invention, hi is between 1 and 20 mm, while d is between 5 and 20 mm.

The adapter element 5 comprises an aligning portion 8, delimited in the figure at the top by the dashed line and defined by a rigid structure 9 that is suitable for being inserted, without freedom of transverse movement, into a groove S of the tread of a pneumatic tyre T. The distance between the upper surface 8 and the upper surface 6 is he, which, according to the present invention, is between 0 and 10 mm.

The adapter element 5 has a longitudinal extension w which, according to the present invention, is between 5 and 50 mm.

Shown in cross-section in Figure 3 is an adapter element 5 in use and inserted into a groove S of a tread T.

From Figure 3 it can be seen how the adapter element 5 on the one hand is connected interlocking with the head 2 of the laser device 1 by means of the insertion of the retractable actuating pins 4 within the circular cavity 7, and on the other hand is connected interlocking with the pneumatic tyre by means of the insertion of the rigid structure 9 of the alignment portion 8 within the groove S of the tread T.

The conformation illustrated in Figure 3, and described above, makes it possible both to be able to apply pressure to the retractable actuating pins 4 and, therefore, to activate of the laser, also in the presence of a non-planar surface (the pneumatic tyre grooves), and to ensure the proper alignment of the window within the groove wherein the particular surface structure is to be created. In fact, the size of the alignment portion 8 must be such as not to allow for transverse movements of the adapter element within the groove and to maintain the angle of incidence of the laser perpendicular to the lower surface of the groove, ensuring therefore, the maintaining of the exact alignment of the window 3 with the groove S. The term transverse movements refers to movements that are transverse to a longitudinal axis X of the groove S.

If the machining head of the laser device does not include the two retractable pins, the upper surface 6 can be attached to the machining head 2 in another manner, whilst still ensuring the correct alignment of the laser beam output window 3 with the groove S.

The adapter elements 5 can be made from any rigid material that allows for effective and stable interlocking, with both the retractable actuating pin 4 and the groove S of the tread T.

The adapter elements can be implemented by means of any mechanical machining technique. One advantageous solution is with regards to the production of the adapter elements 5 in steel and produced using 3D printing. In this way it will be possible to simply and quickly produce adapter elements 5 of appropriate dimensions, according to the tread design to be machined.

As is apparent from the above description, the present invention has the advantage of ensuring the correct creation of the surface structure insofar as the correct alignment is ensured between the laser beam output window 3 and the groove wherein the particular surface structure is to be created. Furthermore, the technical characteristics of the present invention make it possible to adapt a classic laser device that is commonly used for pneumatic tyres for the creation of particular surface structures within pneumatic tyre grooves.

## Claims

1. Assembly for the creation of a tread groove surface structure, comprising a laser device (1) comprising a machining head (2) wherein a laser beam output window (3) is formed, wherein the emission modes thereof have been programmed using appropriate software; said assembly being **characterized in that** in comprises a plurality of adapter elements (5) wherein each thereof comprises an upper surface (6) that is suitable for being connected to said machining head (2) and an alignment portion (8) defined by a rigid structure (9) that is suitable for being inserted, without freedom of transverse movement, within a groove (S) of a pneumatic tyre tread (T), and **in that** said machining head (2) comprises at least one pair of retractable drive pins (4) arranged on opposite sides in relation to the window (3) and having the function of actuating the emission of the laser itself, and by the fact that upon said upper surface (6) of each of the adapter elements (5) a cavity (7) is formed that is suitable for housing with adherence a respective retractable actuating pin (4) and wherein the height thereof is less than that of the respective retractable actuating pin (4) in an extended position thereof.

2. Assembly according to claim 1, **characterized in that** said cavity (7) has a circular shape with a diameter of between 5 and 20 mm and a height of between 1 and 20 mm.

3. Assembly according to one of the preceding claims, **characterized in that** said upper surface (6) is set apart from said aligning portion by a distance of between 0 and 10 mm.

4. Assembly according to one of the preceding claims, **characterized in that** each of said adapter elements has a longitudinal extension of between 5 and 50 mm.

5. Assembly according to one of the preceding claims, **characterized in that** said adapter elements are made of steel.

6. Assembly according to one of the preceding claims, **characterized in that** said adapter elements are made by means of 3D printing.

## Patentansprüche

1. Baugruppe zur Herstellung einer Oberflächenstruktur einer Laufflächenrillen mit einer Laservorrichtung (1), die einen Bearbeitungskopf (2) umfasst, in dem ein Laserstrahl-Ausgangsfenster (3) ausgebildet ist, dessen Emissionsmodi unter Verwendung einer geeigneten Software programmiert worden sind; wobei die Baugruppe **dadurch gekennzeichnet ist, dass** sie eine Vielzahl von Adapterelementen (5) umfasst, von denen jedes eine obere Fläche (6) umfasst, die geeignet ist, mit dem Bearbeitungskopf (2) verbunden zu werden, und einen Ausrichtteil (8), der durch eine starre Struktur (9) definiert ist, die geeignet ist, ohne Querbewegungsfreiheit in eine Rille (S) einer Luftreifenlauffläche (T) eingesetzt zu werden, und dass der Bearbeitungskopf (2) mindestens ein Paar von einziehbaren Antriebsstiften (4) umfasst, die auf gegenüberliegenden Seiten in Bezug auf das Fenster (3) angeordnet sind und die Funktion haben, die Emission des Lasers selbst zu betätigen, und durch die Tatsache, dass auf der oberen Oberfläche (6) jedes der Adapterelemente (5) ein Hohlraum (7) gebildet ist, der geeignet ist, einen jeweiligen einziehbaren Betätigungsstift (4) anhaftend aufzunehmen, und wobei die Höhe desselben geringer ist als die des jeweiligen einziehbaren Betätigungsstifts (4) in einer ausgefahrenen Position desselben.

2. Baugruppe nach Anspruch 1, **dadurch gekennzeichnet, dass** der Hohlraum (7) eine kreisförmige Form mit einem Durchmesser zwischen 5 und 20 mm und einer Höhe zwischen 1 und 20 mm aufweist.

3. Baugruppe nach einem der vorhergehenden Ansprüche, **dadurch gekennzeichnet, dass** die obere Fläche (6) von dem Ausrichtteil um einen Abstand zwischen 0 und 10 mm entfernt ist.

4. Baugruppe nach einem der vorhergehenden Ansprüche, **dadurch gekennzeichnet, dass** jedes der Adapterelemente eine Längserstreckung zwischen 5 und 50 mm aufweist.

5. Baugruppe nach einem der vorangehenden Ansprüche, **dadurch gekennzeichnet, dass** die Adapterelemente aus Stahl hergestellt sind.

6. Baugruppe nach einem der vorangehenden Ansprüche, **dadurch gekennzeichnet, dass** die Adapterelemente mittels 3D-Druck hergestellt sind.

## Revendications

1. Assemblage pour la création d'une structure de surface de rainure de bande de roulement, comprenant un dispositif laser (1) comprenant une tête d'usinage (2) dans laquelle est formée une fenêtre de sortie du faisceau laser (3), dont les modes d'émission ont été programmés à l'aide d'un logiciel approprié ; Cet ensemble est **caractérisé en ce qu'**il comprend plusieurs éléments adaptateurs (5) dont chacun comprend une surface supérieure (6) apte à être connectée à ladite tête d'usinage (2) et une partie d'alignement (8) définie par une structure rigide (9) apte à être insérée, sans liberté de mouvement transversal, à l'intérieur d'une rainure (S) de la bande de roulement d'un pneumatique (T), et **en ce que** ladite tête d'usinage (2) comprend au moins une paire de goupilles d'entraînement rétractables (4) disposées sur des côtés opposés par rapport à la fenêtre (3) et ayant la fonction d'actionner l'émission du laser lui-même, et par le fait que sur ladite surface supérieure (6) de chacun des éléments adaptateurs (5) est formée une cavité (7) qui est apte à loger avec adhérence une goupille d'actionnement rétractable respective (4) et dans laquelle la hauteur de celle-ci est inférieure à celle de la goupille d'actionnement rétractable respective (4) dans une position déployée de celle-ci.

2. Assemblage selon la revendication 1, **caractérisé en ce que** ladite cavité (7) a une forme circulaire avec un diamètre compris entre 5 et 20 mm et une hauteur comprise entre 1 et 20 mm.

3. Assemblage selon l'une des revendications précédentes, **caractérisé en ce que** ladite surface supérieure (6) est écartée de ladite portion d'alignement d'une distance comprise entre 0 et 10 mm.

4. Assemblage selon l'une des revendications précédentes, **caractérisé en ce que** chacun de ces éléments d'adaptation a une extension longitudinale comprise entre 5 et 50 mm.

5. Assemblage selon l'une des revendications précédentes, **caractérisé en ce que** lesdits éléments d'adaptation sont en acier.

6. Assemblage selon l'une des revendications précédentes, **caractérisé en ce que** lesdits éléments adaptateurs sont réalisés par impression 3D
